# EUROPEAN PATENT SPECIFICATION

(11) **EP 2 716 591 B1**
(45) Date of publication and mention of the grant of the patent: **13.05.2015**
(21) Application number: 12187069.5
(22) Date of filing: 03.10.2012
(51) Int. Cl.: B66F 9/065, B66F 9/12, B65G 67/02, B65G 67/20, B65G 67/24

(54) **System for the automatic loading and unloading of trucks and containers**
System zum automatischen Be- und Entladen von Lastwagen und Behältern
Système pour charger et décharger automatiquement des camions et des conteneurs

(43) Date of publication of application: 09.04.2014
(73) Proprietor: Montajes de Maquinaria de Precision, S.A., 33203 Gijon (ES)
(72) Inventor: Bausela Sanchez, Fernando, 33203 GIJON (ES)
(74) Representative: Isern-Jara, Nuria

(56) References cited:
- EP-A2- 0 472 439
- US-A- 3 819 068
- US-A- 5 685 416
- US-A1- 2005 053 451

## Description

### Object of the invention

This invention refers to a system for the automatic loading/unloading of trucks and/or containers, preferably and fundamentally provided for the loading and unloading of platforms inside the load bearing compartment of a truck, which system may be used as well for the loading and unloading of containers, without excluding other applications in which the system may be used.

The object of the invention is to obtain the automatization of the loading/unloading of trucks, which may be used in multiple loading bays without need of human intervention, which system may be used in any type of truck, without having to carry out any type of modification in this latter.

It is also an object of the invention to obtain an efficient system which is independent of the length of the truck, as well as to carry out the loading and unloading operations at a high rate, with the maximum safety conditions for the staff in the plant and for the carrier.

It is also an object of the invention to obtain that without additional elements, the system may prevent sudden movements of the load and the contact of the same with the side walls of the load bearing compartment of the truck during loading and unloading processes.

### Background of the invention

Traditionally, the loading of platforms in transport trucks is usually carried out manually by means of a fork lift truck driven by an operator, so that with this operating system the maximum loading rate is of 60 platforms per hour.

However, various types of loading systems are presently known, among which:
A system known as "chain track" in which it is necessary to have an installation on the floor of the loading compartment of the truck, featuring six rows of chains running alongside, which are raised during the process of loading and unloading and subsequently they permit the displacement of the goods on platforms.

Another system, known as "foil system", is similar to the above explained system, however extending to the whole surface, for which reason it may be used to handle loads which have not previously been laid on platforms, for instance vehicle tyres.

Both systems imply the need to carry out modifications in the truck.

Another commonly known system is the "Load Runner" system which is based on a support located under the platforms, with the aim to permit the forks to be introduced under said supports to introduce or to extract to the load. This system implies the location of supports in the load bearing compartment of the truck, which forces the implementation of the loading and unloading system in the point of origin as well as in the point of destiny of the load, given the fact that the supports on which the load will located will prevent the unloading by the traditional systems.

Another system is based on the so called "Automatic Guided Vehicle" consisting in multiple autonomous vehicles which autonomously displace across the plant locating the platforms within the truck, one by one. This system has the drawback that the side margins are not sufficient to carry out the job in an optimal way. This system which is more adequate for countries like USA or Canada, due to the fact that in these countries the trucks are wider than in Europe and therefore the operating side margins are larger. That is, in Europe these systems are hardly used and in case of use it is only for very specific jobs. It is to be taken into account as well the fact that the loading rates are lower (one platform for each loading cycle) and that in addition, it needs high installation costs in any of its modalities, whether a laser guided system, a mirror system or by means of underground wires.

Another system is based in a telescopic arm with a fork positioning device and a pole in one of its ends to carry out the loading, said arm being supported on wheels to reduce the bending moments, including automatized hydraulic systems, and although in this case the loading operation may be carried out without modifications in the truck, the system has the drawback that the loading rate is very low, due to the fact that the time needed for extending and recovering the telescopic arm is very substantial. Also, for recovering the arm a lot of space is needed and the system is only applicable on a loading bay, for which reason in case of having to assist various loading bays, this would imply the installation of the system in all of them with the subsequent high investment.

Another system is the so called "Automatic truck loading system", based on a platform which transports a loading module which may be displaced along various loading bays.

This system is more complete than those above explained and is apparently valid for any truck, however it does not correctly perform with trucks having a load compartment of the tauliner type which, on the other side, must necessarily have base boards incorporated in the side walls on which the mechanical guiding system may abut and roll. Given the deformations which the guiding system may produce in the loading compartment of the truck, it is more adequate for rigid trucks than for refrigerate trucks. On the other side, due to the lack of flexibility of its guidance system formed by side wheels, it is less tolerant to changes in the slope or to mechanical breakdowns which may induce the skidding of the load.

This system suffers as well from a safety hazard given the fact that the load module has a weight which together with that of the load sometimes exceeds the allowable load limit per axle, producing a severe rolling of the truck, which requires the load compartment of the truck to have a certain resistance. The unavoidable descent of the load compartment of the truck due to the weight, has to be necessarily prevented by supporting the frame of the truck on hydraulic jacks capable to support the overall weight. This operation forces the human intervention or alternatively requires a technically difficult and costly automatization, which by now is not available to these systems.

For the above reasons, this system which apparently is better adapted to the needs of the application is not an adequate option to guaranty in a general form the variability of the automatic process in technical and economical terms.

Apart from the above explained systems, other systems may be cited which correspond to the disclosure of various patents such as German patent DE 19647110 A1; DE 3151402 A1; EP 0346292 A1; EP 2022738 A1; ES 2109836; IT 1228235 B; US 56885416 A among others, however in no case the results obtained with the systems of said patents or the other described systems may be qualified as optimal as they are not capable of obtaining the loading cycles which could justify the need and viability of its implementation. EP 0472439 A3 discloses a system according to the preamble of the independent claim 1. Furthermore, these systems do not permit to obtain a full automatization nor an efficient fast and safe operation in the loading of a truck, for which reason its use has not extended.

### Description of the invention

The system of the invention has been contrived to solve the above stated problems by means of a simple but fully effective solution, which is specified by the independent claim 1.

In other terms, the system of the invention, foreseen for its use in loading and unloading trucks in multiple loading bays has a movable structure which will be called in the following "transshipment system", permitting the whole structure to be displaced along the different loading bays to carry out loading and unloading of various trucks. The transshipment system is based preferably in a frame supported on four wheels, two of them motor driven wheels, having additionally guiding rollers arranged on a central axle, permitting to the assembly formed by this latter and a lengthwise carriage to displace along a guiding track transversally arranged in respect to the loading bays. The transshipment system has an articulation binding the same to the lengthwise carriage in which end a positioning system with three forks is arranged for picking up and transferring the platforms, said lengthwise carriage having a telescopic system which permits its guiding during the extension and recovering maneuvers for the introduction or recovering of the load toward/from the truck and for the retrieving of the lengthwise carriage up to its position of origin.

The displacements of the transshipment system will be carried out by means of electric motors complemented by a guidance system to carry out the movement along a straight line, being guided on a guiding track placed on the floor by means of which small wheels (guiding rollers) will rotate to permit to locate the transshipment system in a previously known position.

The lengthwise carriage has to be supported on the ground by means of its wheels for the lengthwise displacement to carry out the loading and unloading maneuvers of the platforms. Therefore, it would be necessary to raise the carriage during the transshipment maneuver in order that the lengthwise wheels do not bear on the tracks. To this end, a system of "transverse wheels" and supports on the frame of the transshipment system has been provided to raise the longitudinal carriage and to permit its sidewise displacement during the transshipment maneuvers. The basically movement of the wheels and the supports, which is necessary to make this change of position, will be carried out hydraulically by means of the same driving system used for the three fork positioning device and raising mechanism which will be described later on.

The sidewise push is transmitted to the longitudinal carriage by means of the mobile supports of this latter on the frame of the transshipment system and the articulation binding the same to the frame.

The transshipment system may comprise, if needed, an area or space reserved for a roller belt and/or conveyor for inputting or outputting the loads in the system.

The longitudinal carriage will pick up the platforms transporting them to the interior of the truck to which end it has in the front part an elevation mechanism similar to a conventional forks lift truck permitting the raising and inclination of the load having as well a triple positioning system which permits to pick up to three platforms, permitting its sideways displacement within a small margin.

Said longitudinal carriage has an electric driving system with one or more geared motors for driving the various axles, said axles being displaced by means of said geared motors.

The above mentioned axles include a number of wheels with the aim that in case of occurring some skidding or driving problem in any of them, the rest of wheels may permit to follow a straight route. That is if the supporting action is higher, it will be less probable that the machine may skip sideways, this circumstance having to be limited as much as possible to reduce the deformations in the load guiding system and in order to simplify the design of the same.

Each axle will have its own frequency converter which will work in a coordinated way forming a unique "electric axle". This will permit to occasionally influence the driving actions as a response to skidding, acting when necessary on the motor couple in case that in some of the axles a difference of speed is detected due to sudden changes in the resisting couple.

The longitudinal carriage has an hydraulic group and a small electrical cabinet to control the sensors, cylinders of the elevation system, geared motor, etc. which will be suitably located in appropriate places to optimize its size and functionality.

On the other side, a telescopic structure connects the above explained longitudinal carriage with the structure foreseen for the transshipment system, telescopic structure being formed by two mutually sliding parts which are articulated in the area of union, which makes possible to locate the support wheels on the ground, which contributes to support the efforts due to the weight of the structure in its position of maximum extension.

In addition to the intermediate articulation between both parts of the telescopic structure, this latter is articulated by its rear end to the transshipment system and by its front end to the longitudinal carriage.

The system may occasionally have an arrangement of roller belts and/or roller chains as means for the transportation of the load, so that when the load reaches the transshipment system it will be placed on said arrangement of roller belts and/or roller chains which will carry out the displacement of the load up to its situation in front of the loading fork arranged on the longitudinal carriage, at which time the carriage will move the necessary distance to pick up the platforms, to carry out its elevation and releasing the assembly of roller belts and/or roller chains which displace the load up to locating the same opposite to the front part of the loading fork in order that these roller belts and/or roller chains which in the following will be designated "transfer carriage", recover its initial position leaving an space free in order that the fork of the longitudinal carriage carries out the introduction of the load into the interior part of the truck. Said transfer carriage may be located on a fixed structure, therefore not being secured to the transshipment system, said transportation system enhancing the passage of the platforms through the loading/unloading system of the trucks up to the line-up of the load beside the loading doors. This will be only necessary in layouts with more than two loading bays.

The above explained telescopic structure may be formed by a scissors-like structure with a more compact character in its position of maximum retraction, however having the drawback of not guaranteeing the necessary strength to the crosswise efforts which could be provoked by an eventual skidding of the longitudinal carriage which may cause problems and drawbacks at the moment of carry out the introduction of the load in the interior compartment of the truck.

The system will include as well distance sensors on the side portions of the loading fork to measure the distance of this latter in respect to the lateral walls of the truck, being able to establish the exact distance of the load and by means of a control system, to displace the positioning device of the fork with the corresponding load to one side or the other to prevent physical contact with the side walls of the truck.

An arrangement for positioning the transshipment system has also been provided to locate this latter on the corresponding bay, according to the position which occupies the truck, and particularly in respect to the loading compartment of the same to which end it will be evaluate to establish the position of the truck in each case to obtain an optimal maneuver for the entry of the load in the interior part of the truck.

The positioning of the transshipment system may be obtained by means of sensors located on the loading bay itself, with the object to evaluate the position of the loading compartment of the truck or alternatively to use a scanning sensor which determines the position by means of a sweeping operation.

In a complementary way to the positioning of the carriage, the system has the additional possibility to incorporate an assistance device in order that the driver of the truck may be able to correctly position the load compartment or container in the loading bay. The system has the corresponding detection and warning elements to facilitate de maneuver.

According to the above mentioned features which define the automatic truck loading system of the invention, the improvements deriving from the same are many, among which those which follow:
- Possibility to carry out the automatic loading and unloading in multiple bays in a sequential way, being able to load up to 150 platforms per hour in comparison to 60 platforms per hour which the conventional fork lift systems are able to load as a maximum. This would permit to suppress almost three fork lift trucks working simultaneously still having the same loading capacity with the system of the invention.
- Possibility to dedicate the operator of the fork lift trucks to other higher valuable jobs.
- Possibility that the system may be operated during 24 hours a day during the 365 days of the year.
- Reduction of the waiting times of the trucks.
- Reduction of the safety hazards of the operators given the fact that the suppression of the fork lift loading systems will bring about the elimination of a part of the traffic in the plant where the loading is being carried out and therefore the elimination of a part of the risk of accidents for the operators of the plant.
- Elimination of maintenance and repair costs of the fork lift trucks, caused by misuse, breakdowns or accidents not inherent to its operation.
- Elimination of the need to charge and discharge the batteries required for the operation of the fork lift trucks, as well as the maintenance of said batteries and the cost of its replacement, as the system of the invention will work only by branching to the mains.
- Reduction of the number of bays in the corresponding industrial installation, because being the loading faster than usual, not so many loading bays will be necessary and the trucks will stand waiting less time.
- Generally, the increase of the capacity of the installation proportionally reduces the structure cost ratio in respect to the unitary cost of the logistic operations.
- No kind of modification is needed in the trucks nor the mounting of additional elements to carry out the automatic loading.
- Increase of the productivity given the high rate of platform loading obtained (150 platforms per hour in comparison to 60 platforms per hour as a maximum with a traditional loading by means of fork lift truck).
- Functionally, a very reliable system is established, structurally a robust and valid for any type of platform, whether of the European or American type avoiding any dimensional limitations derived from other solutions.
- Elimination of sudden rolling of the truck, which is usually produced in the traditional systems.
- Possibility to operate the system independently of the height of the ramp in the loading bay.
- Elimination of the side contacts with the loading compartment of the truck given the incorporated guidance means based in sensors of the distance, proximity, external profile, etc. obtaining higher speeds in the loading and unloading cycles and eliminating the risk of damages produced by the contact between mobile parts.
- Improvement of the safety in the operation by means of implementation of multiple sensors and safety systems in the various parts of the system.
- Contactless register maneuver of the load, determining the exact position of the loading compartment of the truck in respect to the bay, which permits to position the fork lift with the load itself, so that a fast and convenient maneuver may be carried out.
- The system is more compact than the present solutions, so that if the spaces are minimized a higher speed in the transport of the loading system will be obtained.
- In comparison with other systems the invention additionally incorporates a guidance device for guiding trucks in the maneuver of approaching the loading bay.
- The invention may be optionally complemented by an emergency retraction system for bringing back the longitudinal carriage in case of incidences within the loading compartment of the truck.
- Also and in an optional form, the system may be adapted for its application to other type of loads, such as small platforms, paper bobbins, cardboard boxes, etc.

### Description of the drawings

To complement the description which will be carried out as follows and in order to assist to a better understanding of the features of the invention, according to a preferred practical embodiment of the same, a set of drawings is enclosed forming part of the description and having illustrative and non limitative character showing as follows:
Figure 1, a general perspective representation of the automatic truck loading and unloading system according to the invention.
Figure 2, a top plant view of the longitudinal carriage forming part of the system of the invention.
Figure 3, a perspective view of the form of operation of the system.
Figure 4 shows a lateral detail of the joints of the telescopic structure and in respect to the transshipment system and the longitudinal carriage shown in the previous figure.
Figures 5, 6, 7, 8, 9 and 10, corresponding perspective views of the sequential steps of the operation of the system to carry out the loading in the interior part of the load compartment of a truck.

### Preferred embodiment of the invention

As may be appreciated in the enclosed figures, the system of the invention is formed starting from what is called a transshipment system, formed by a frame (1) supported on four wheels (3) in which a joint is supported, by means of which the thrust is transmitted to permit the sideways displacement of a longitudinal carriage (4) when supported by transverse wheels (17), permitting to carry out the loading and unloading of the various trucks which are at the moment at the loading bays, all of it as will be explained in detail in the following.

The transshipment system may be moved by driving electric motors (16) being guided in its displacement by means of a guiding rail (2) located on the ground, so that in its operation some small wheels roll in correspondence with two or more points along the transshipment system to permit locate this latter in a known position.

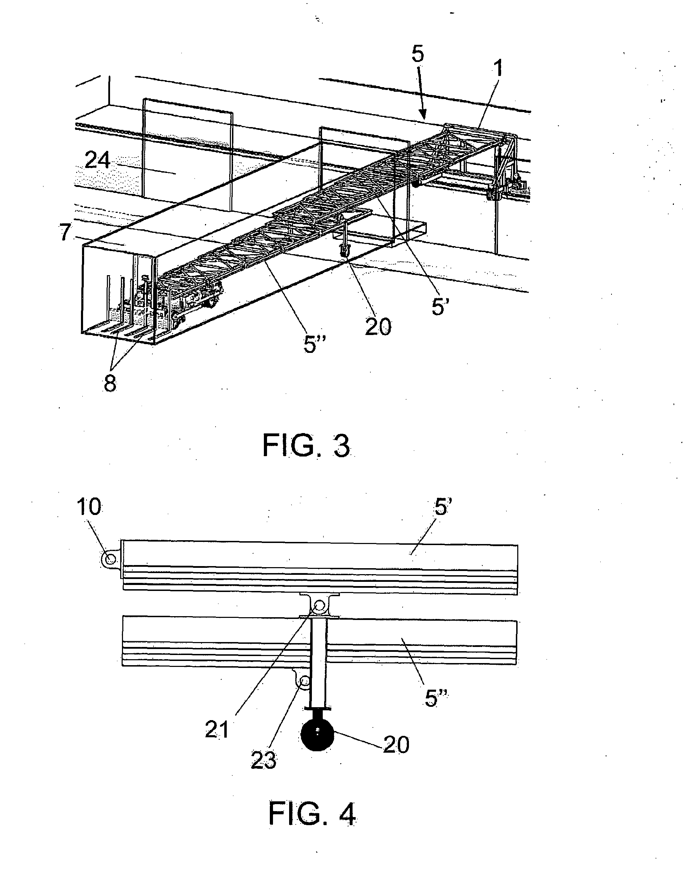

On said transshipment system, and specifically on the frame (3), a longitudinal carriage (4) with telescopic structure (5) is articulated as represented in figure 3.

The longitudinal carriage (4) is aimed at picking up the platforms (6) to introduce and recover them from the loading compartment (7) of the truck including on its front part a triple fork positioning device (8) similar to that used in a conventional fork lift truck, making possible the rising and inclination of the load including as well a positioning device which permits to pick up to three platforms, making possible the sideways displacement within an small margin.

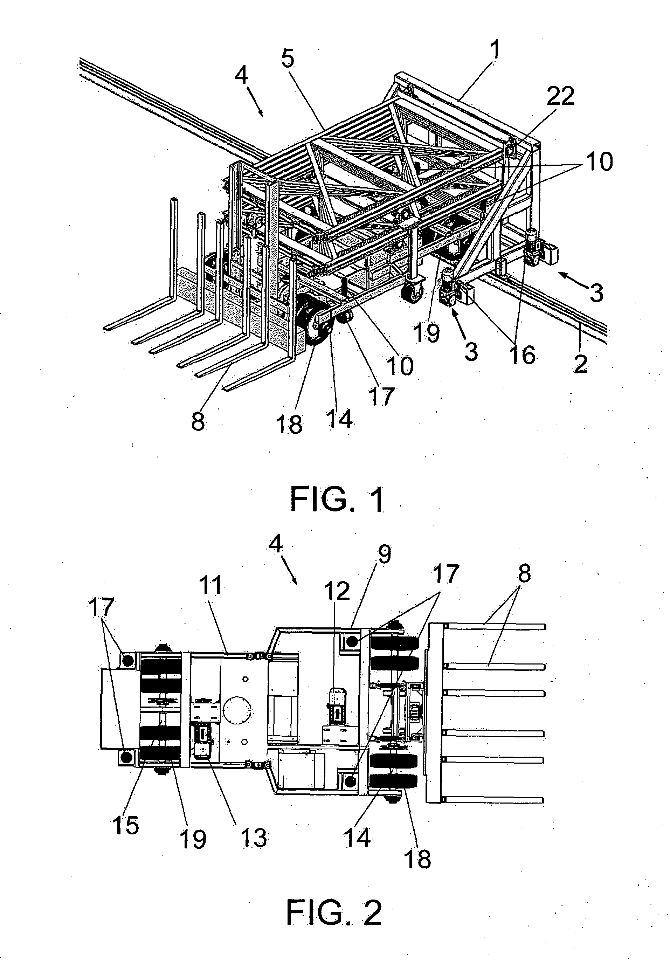

Said longitudinal carriage (4) has, apart from the triple fork positioning device (8), a frontal portion (9) is located immediately after the triple fork positioning device (8) and a rear portion (11), so that in said front and rear portions respectively (9) and (11), traction systems are provided driven by one or more electric motors (12, 13) as shown in figure 2, so that in the preferred example for the practical embodiment, the motor (12) displaces the front axle (14) corresponding to the front portion (9), while motor (13) displaces the rear axle (13) arranged in the rear portion (11), said axles (14, 15) forming part of an unique electric axle.

In the operation of the system, the longitudinal carriage (4) is capable of moving in elevation/descent sense by means of hydraulic elements (10).

Both the front axle (14) as the rear axle (15) respectively have multiple wheels (18, 19) in order that in case of appearing an skidding or traction problem in any of them, the rest would bear on the ground to continue its straight course, that is, to prevent lateral displacement of the longitudinal carriage (4) altogether.

The system of the invention, in addition to the explained transshipment system and longitudinal carriage has the telescopic structure (5) to which reference has already been made in the aforegoing which by one end is articulated to the frame (1) of the transshipment system and is also articulated to the longitudinal carriage (4), said telescopic structure (5) consisting of two parts (5', 5") mutually and telescopically movable by means of rollers or any other suitable system, with the peculiarity that both parts complement each other with a support by means of wheels (20) to obtain position stability in the extended position of the telescopic structure (5).

Figure 4 shows a side detail of both structures (5', 5") having a common joint (21) in addition to the joint (22) to the frame (1) of the transshipment system and the joint (23) to the longitudinal carriage (4).

Said telescopic structure (5) is capable of easily retracting and extending occupying a minimum space in the pick up position as shown in figure 1, so that the support (20) on the ground assists in supporting the efforts due to the weight of the system itself.

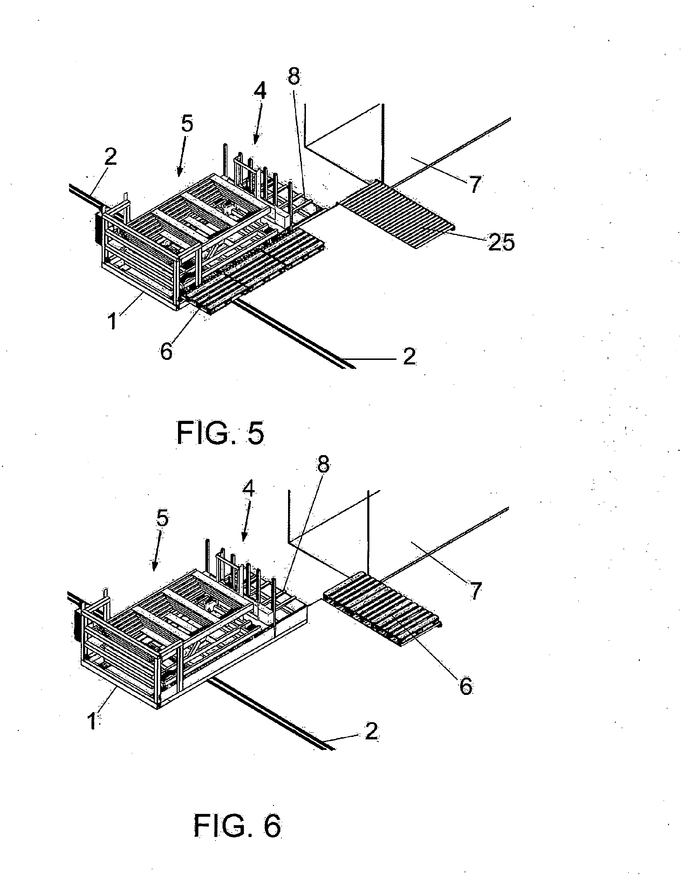

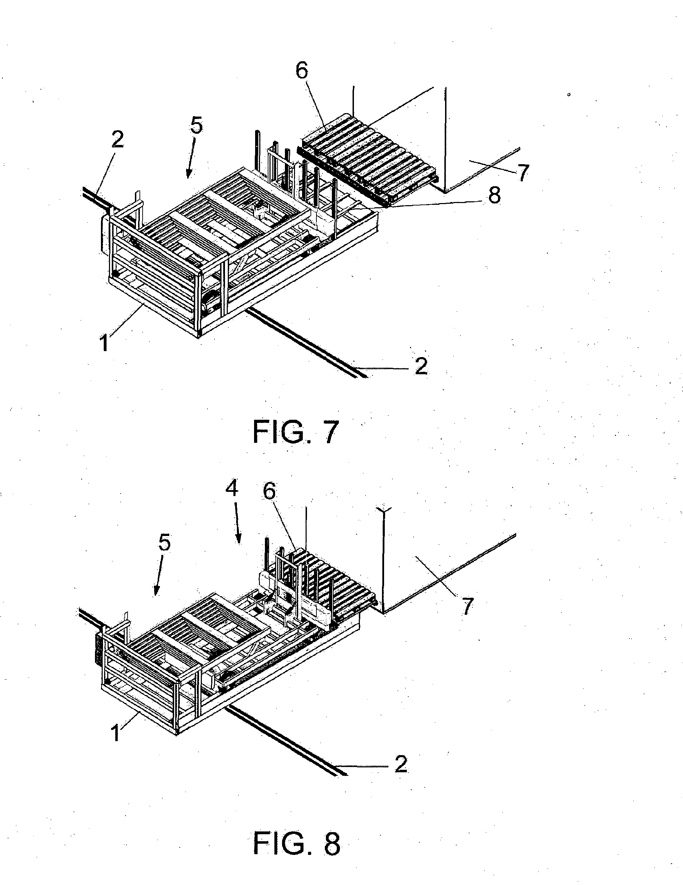

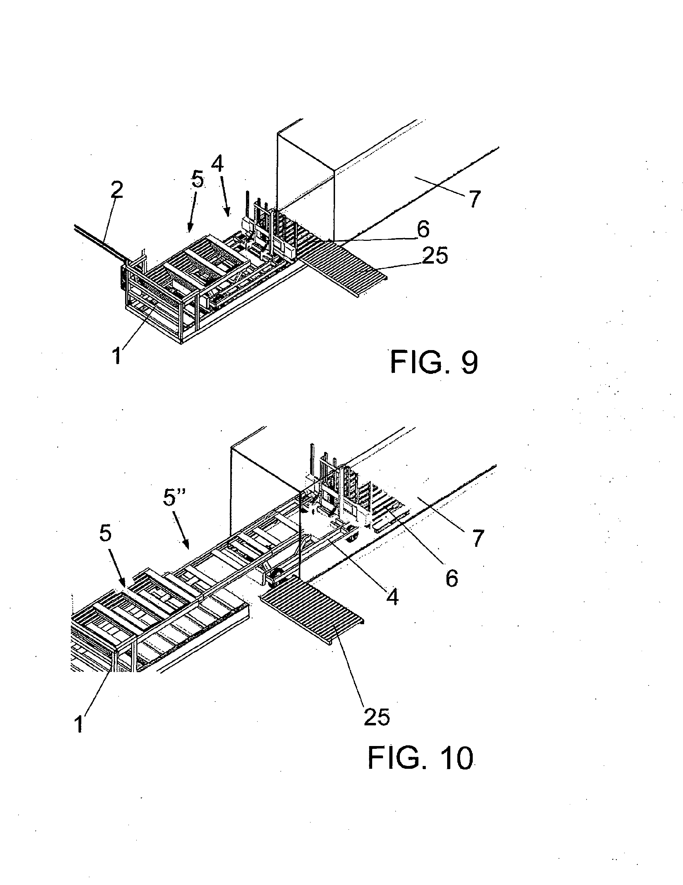

On the other side, it has been provided that the frame (1) forming the transshipment system has a free space, as shown in figure 1, in which an assembly of roller and/or chain belts may be located for the reception of the load or platforms (6) as shown in figure 5, so that this load or platform (6) advances on the roller belt up to reaching the transfer carriage (25) which objective is to carry out the transfer of said platforms (6) or the load on a triple fork positioning device (8) of the longitudinal carriage (4) as shown in the operative sequences shown in figures 5 to 8 as said transfer carriage (25) displaces the load (6) until it is placed on the front portion that is, opposite to the frontal part of the triple fork positioning device (8) of the longitudinal carriage (4), moment in which this latter will advance by its own driving means, extending the telescopic structure (5) picking with the triple fork positioning device (8) the loads or platforms (6) raising the same for releasing the transfer carriage (25) being this latter brought back to its original position, as shown in figure 9, to let the part immediately behind the opening of the loading compartment (7) of the truck free, permitting the introduction of the load (6) in the interior of said load compartment (7), as shown in figure 10.

Next, the total extension of the telescopic structure (5) is carried out for introducing and locating the load or platforms (6) in the interior of the load compartment (7) of the truck, so repeating the cycle until completing the total loading of the load compartment (7) of the truck by means of platforms (6) all of it in an automatized way without intervention of human operators.

As explained in this description, the system will be complemented with guiding means for the loading operations comprising distance sensors which may be located on the lateral surfaces of the triple fork positioning device (8) in order to evaluate the distance from this latter to the side walls of the load compartment (7) of the truck, so that by means of a control system the exact distance from the load or platforms (6) will be determined, moving the triple fork positioning device (8) towards one side or the other to prevent physical contact with the internal side of the lateral walls of the loading compartment (7).

Means for the positioning of the transshipment system have been provided as well, given the fact that the system of the invention is valid for multiple loading bays (24) for which reason when the loading of a truck located in any of the different bays is needed, it will be necessary to locate the transshipment system in the corresponding loading bay.

To this end, it has been foreseen the possibility to locate sensors on the loading bays to determine the position of the load compartment (7) of the truck, or alternatively to locate a scanning sensor to determine the precise position by means of sweeping.

Finally, it has to be stated that the two parts (5', 5") of the telescopic structure (5) are capable to sliding one in respect to the other by means of rollers or bearings which will support in an optimal way the forces generated in the structure.

## Claims

1. System for the automatic loading and unloading of trucks and containers, preferably and essentially provided for permitting the loading and unloading of platforms into/from the load compartment of a truck or container, in an industrial installation with one or more loading bays, comprising a transshipment system formed by a frame (1) capable to run in rectilinear form on a guide rail (2) located on the ground to permit its location in any of the loading bays, a longitudinal carriage (4) having a telescopic structure (5) which makes possible its guidance during the movement in any sense of the longitudinal carriage (4) to introduce/retrieve the load (6) into/from the internal part of the loading compartment of a truck (7); the longitudinal carriage (4) including in its front part a triple fork positioning device (8) and behind of it a front part (9) and a rear part (11) with its corresponding traction system for the movement of said longitudinal carriage (4) while the telescopic structure (5) is formed by two parts (5', 5") mutually movable to obtain its extension or retraction **characterized by** said longitudinal carriage (4) being bound to said frame (1) by means of a joint permitting to compensate the plane variations during the longitudinal advance, said parts (5', 5") being mutually articulated by means of a joint (21) and articulated to the frame (1) located in the transshipment system and to the longitudinal carriage (4) by means of an articulation point (22) of the rear part (5') and an articulation point (23) of the front part (5"); being provided as well that said telescopic structure (5) be complemented with supporting wheels (20) bearing on the ground in order to support the efforts originated by the weight of the system and by the load.

2. System for the automatic loading and unloading of trucks and containers, according to claim 1, **characterised in that** the longitudinal carriage (4) in addition to the triple fork positioning device (8) provided in the front part includes axles (14) and (15) respectively in the front part (9) and in the rear part (11) being driven respectively, by an electric geared motor (12, 13) having each of said axles (14, 16) multiple wheels (18, 19) supported on the ground; having been provided that said longitudinal carriage (4) is pushed by the frame (1) of the transshipment system in the transverse movement of said transshipment system on transverse displacement wheels.

3. System for the automatic loading and unloading of trucks and containers, according to the previous claims, **characterised in that** secured to the frame (1) forming part of the transshipment system, an area has been arranged for the location of eventual chain or roller belts to locate the load (6) which reaches a transfer carriage (25) to pick up said load (6) and moves the same until its location in front and opposite to the triple fork positioning device (8) of the longitudinal carriage (4) into order that after the load (6) has been picked up by the lifting fork (8), to move the transfer carriage (25) rearwards to permit its introduction by means of the triple fork positioning device (8) into the interior part of the load compartment of the truck (7).

4. System for the automatic loading and unloading of trucks and containers, according to the previous claims, **characterised in that** guiding means are included by means of sensors located on the sides of the triple fork positioning device (8) to evaluate the distance from this latter to the side walls of the load compartment of the truck (7) to permit in combination with a control system to carry out the location of the forks (8) to one side or the other to prevent the contact with the internal side walls of the load compartment (7) of the truck.

5. System for the automatic loading and unloading of trucks and containers, according to claims 1 to 3, **characterised in that** it includes means for positioning the transshipment system to locate the same in register with the corresponding loading bay (24) and opposite to the compartment load of the truck (7) to be loaded, said positioning means being based on sensors provided in the same loading bay to evaluate the relative position between the loading compartment (7) of the truck and the transshipment system.

6. System for the automatic loading and unloading of trucks and containers, according to claim 5, **characterised in that** the means for positioning the transshipment system comprise an scanning sensor which by means of sweeping evaluates the position of the same in respect to the loading compartment (7) of the truck to be loaded.

## Patentansprüche

1. System zur automatischen Beladung und Entladung von Lastkraftwagen und Containern, vorzugsweise und im Wesentlichen vorgesehen, um die Beladung und Entladung von Plattformen in den/aus dem Laderaum eines Lastkraftwagens oder Containers in einer Industrieanlage mit einer oder mehreren Laderampen zu ermöglichen, ein Umladungssystem umfassend, gebildet durch einen Rahmen (1), der in der Lage ist, geradlinig auf einer Führungsschiene (2) zu verlaufen, die sich auf dem Boden befindet, um ihre Platzierung in jeder der Laderampen zu ermöglichen, einem Längsschlitten (4) mit einer Teleskopstruktur (5), welche während der Bewegung seine Führung in jede Richtung des Längsschlittens (4) ermöglicht, um die Fracht (6) in/aus dem inneren Teil des Laderaums eines Lastkraftwagens (7) einzuführen/herauszuholen; wobei der Längsschlitten (4) in seinem vorderen Teil eine dreigabelige Positioniereinrichtung (8) und dahinter einen vorderen Teil (9) und einen hinteren Teil (11) mit seinem entsprechenden Antriebssystem für die Bewegung des genannten Längsschlittens (4) umfasst, während die Teleskopstruktur (5) durch zwei gegenseitig bewegbare Teile (5', 5") gebildet ist, um deren Ein- oder Ausfahren zu erreichen, **dadurch gekennzeichnet, dass** der besagte Längsschlitten (4) mit dem genannten Rahmen (1) mittels eines Gelenkes verbunden ist, welches es ermöglicht, die Schwankungen in der Ebene bei dem Längsfortschreiten auszugleichen, wobei die genannten Teile (5', 5") gegenseitig mittels eines Gelenkes (21) angelenkt sind, und mit dem Rahmen (1), der sich in dem Umladungssystem befindet, und dem Längsschlitten (4) mittels einem Anlenkpunkt (22) des hinteren Teils (5') und einem Anlenkpunkt (23) des vorderen Teils (5") angelenkt sind; wobei auch vorgesehen ist, dass die genannte Teleskopstruktur (5) mit Stützrädern (20), auf dem Boden gestützt, ergänzt wird, zur Unterstützung der durch das Gewicht des Systems und der Fracht entstehenden Belastungen.

2. System zur automatischen Beladung und Entladung von Lastkraftwagen und Containern nach Anspruch 1, **dadurch gekennzeichnet, dass** der Längsschlitten (4) zusätzlich zu der im vorderen Teil vorgesehenen dreigabeligen Positioniereinrichtung (8), jeweils in dem vorderen Teil (9) und in dem hinteren Teil (11), Achsen (14) und (15) beinhaltet, welche jeweils mittels eines elektrischen Getriebemotors (12, 13) angetrieben werden, wobei jede der genannten Achsen (14, 16) mehrere auf dem Boden abgestützte Räder (18, 19) aufweist; wobei vorgesehen ist, dass der genannte Längsschlitten (4) von dem Rahmen (1) des Umladungssystems in der Querbewegung des genannten Umladungssystems auf Querverschieberädern geschoben wird.

3. System zur automatischen Beladung und Entladung von Lastkraftwagen und Containern nach den vorhergehenden Ansprüchen, **dadurch gekennzeichnet, dass**, befestigt an dem Rahmen (1), als Teil des Umladungssystems, ein Bereich für den Standort eventueller Ketten- oder Rollenbänder, um die Fracht (6) zu platzieren, angeordnet ist, welcher einen Übergabeschlitten (25) erreicht, um die genannte Fracht (6) aufzugreifen, und diese bis zu ihrem Standort vor und gegenüber der dreigabeligen Positioniereinrichtung (8) des Längsschlittens (4) bewegt, damit, nachdem die Fracht (6) von der Hubgabel (8) aufgegriffen wird, der Übergabeschlitten (25) nach hinten bewegt wird, um seine Einführung mittels der dreigabeligen Positioniereinrichtung (8) in den inneren Teil des Laderaums des Lastkraftwagens (7) zu ermöglichen.

4. System zur automatischen Beladung und Entladung von Lastkraftwagen und Containern nach den vorhergehenden Ansprüchen, **dadurch gekennzeichnet, dass** Führungsmittel mittels Sensoren an den Seiten der dreigabeligen Positioniereinrichtung (8) mit einbezogen sind, um den Abstand von der letztgenannten zu den Seitenwänden des Laderaums des Lastkraftwagens (7) zu bewerten, um in Kombination mit einem Steuersystem zu ermöglichen, die Ortung der Gabeln (8) zu einer Seite oder der anderen zu vollziehen, um den Kontakt mit den inneren Seitenwänden des Laderaums (7) des Lastkraftwagens zu vermeiden.

5. System zur automatischen Beladung und Entladung von Lastkraftwagen und Containern nach den Ansprüchen 1 bis 3, **dadurch gekennzeichnet, dass** es Mittel zur Positionierung des Umladungssystems einschließt, um dasselbe in Übereinstimmung mit der entsprechenden Laderampe (24) und gegenüber der Raumfracht des Lastkraftwagens (7), der geladen werden soll, anzuordnen, wobei die genannten Positionierungsmittel auf Sensoren basieren, die an der gleichen Laderampe vorgesehen sind, um die relative Position zwischen dem Laderaum (7) des Lastkraftwagens und dem Umladungssystem auszuwerten.

6. System zur automatischen Beladung und Entladung von Lastkraftwagen und Containern nach Anspruch 5, **dadurch gekennzeichnet, dass** die Mittel zur Positionierung des Umladungssystems einen Abtastsensor umfassen, der mittels Abtastung die Position desselben in Bezug auf den Frachtraum (7) des Lastkraftwagens, der geladen werden soll, auswertet.

## Revendications

1. Système pour le chargement et le déchargement automatiques de camions et de conteneurs, de préférence et essentiellement prévu pour permettre le chargement et le déchargement de plateformes dans/depuis le compartiment de chargement d'un camion ou d'un conteneur, dans une installation industrielle avec une ou plusieurs baies de chargement, comprenant un système de transbordement formé par un châssis (1) capable de coulisser de manière rectiligne sur un rail de guidage (2) placé sur le sol pour permettre son placement dans n'importe quelle baie de chargement ; un chariot longitudinal (4) ayant une structure télescopique (5) qui rend possible son guidage durant le mouvement dans n'importe quel sens du chariot longitudinal (4) pour introduire/extraire le chargement (6) dans/depuis la partie interne du compartiment de chargement d'un camion (7) ; le chariot longitudinal (4) incluant sur sa partie avant un dispositif de positionnement à fourches triple (8) et derrière celui-ci une partie avant (9) et une partie arrière (11) avec son système de traction correspondant pour le déplacement dudit chariot longitudinal (4) alors que la structure télescopique (5) est formée par deux parties (5', 5") mutuellement amovibles pour obtenir son extension ou rétraction, **caractérisé en ce que** ledit chariot longitudinal (4) est relié audit châssis (1) au moyen d'un joint permettant de compenser les variations planaires durant l'avancement longitudinal, lesdits parties (5', 5") étant mutuellement articulées au moyen d'un joint (21) et articulées au châssis (1) placé dans le système de transbordement et au chariot longitudinal (4) au moyen d'un point d'articulation (22) de la partie arrière (5') et un point d'articulation (23) de la partie avant (5") ; étant également prévu que ladite structure télescopique (5) soit supplémentée par des roues de support (20) en appui sur le sol pour supporter les efforts engendrés par le poids du système et par le chargement.

2. Système pour le chargement et le déchargement automatiques de camions et de conteneurs, selon la revendication 1, **caractérisé en ce que** le chariot longitudinal (4) en complément du dispositif de positionnement à fourches triple (8) prévu sur la partie avant inclut des axes (14) et (15) respectivement sur la partie avant (9) et sur la partie arrière (11) étant entraînés respectivement, par un moteur à engrenages électrique (12, 13) chacun desdits axes (14, 16) ayant des roues multiples (18, 19) supportées sur le sol ; ayant été prévu que ledit chariot longitudinal (4) soit poussé par le châssis (1) du système de transbordement dans le mouvement transversal dudit système de transbordement sur des roues de déplacement transversal.

3. Système pour le chargement et le déchargement automatiques de camions et de conteneurs, selon les revendications précédentes, **caractérisé en ce que** fixée au châssis (1) faisant partie du système de transbordement, une zone a été agencée pour le placement d'un éventuel convoyeur à chaîne ou à rouleaux pour placer le chargement (6) qui arrive à un chariot de transfert (25) pour récupérer ledit chargement (6) et déplace celui-ci jusqu'à son placement en face et à l'opposé du dispositif de positionnement à fourches triple (8) du chariot longitudinal (4) de manière à ce qu'après que le chargement (6) soit été récupéré par la fourche de levage (8), déplacer le chariot de transfert (25) vers l'arrière pour permettre son introduction au moyen du dispositif de positionnement à fourches triple (8) dans la partie intérieure du compartiment de chargement du camion (7).

4. Système pour le chargement et le déchargement automatiques de camions et de conteneurs, selon les revendications précédentes, **caractérisé en ce que** des moyens de guidage sont inclus au moyen de capteurs placés sur les côtés du dispositif de positionnement à fourches triple (8) pour évaluer la distance depuis ce dernier jusqu'aux parois latérales du compartiment de chargement du camion (7) pour permettre en combinaison avec un système de contrôle de réaliser le placement des fourches (8) d'un côté ou de l'autre pour empêcher le contact avec les parois latérales internes du compartiment de chargement (7) du camion.

5. Système pour le chargement et le déchargement automatiques de camions et de conteneurs, selon les revendications 1 à 3, **caractérisé en ce qu'**il inclut des moyens pour positionner le système de transbordement pour placer celui-ci en ligne avec la baie de chargement correspondante (24) et à l'opposé du compartiment de chargement du camion (7) à charger, lesdits moyens de positionnement étant basés sur des capteurs prévus dans la même baie de chargement pour évaluer la position relative entre le compartiment de chargement (7) du camion et le système de transbordement.

6. Système pour le chargement et le déchargement automatiques de camions et de conteneurs, selon la revendication 5, **caractérisé en ce que** les moyens pour positionner le système de transbordement comprennent un capteur à scannage qui au moyen d'un balayage évalue la position de celui-ci par rapport au compartiment de chargement (7) du camion à charger.
